# EUROPEAN PATENT APPLICATION

(11) **EP 4 297 345 A1**
(43) Date of publication of application: **27.12.2023**
(21) Application number: 22755468.0
(22) Date of filing: 11.01.2022
(51) Int. Cl.: H04L 12/28

(54) **METHOD AND DEVICE FOR RECEIVING OAM INFORMATION BLOCK**

(30) Priority: 22.02.2021 CN 202110197764
(71) Applicant: ZTE Corporation, Shenzhen, Guangdong 518057 (CN)
(72) Inventor: LIU, Feng, Shenzhen, Guangdong 518057 (CN)
(74) Representative: Pennacchio, Salvatore Giovanni
(86) International application number: PCT/CN2022/071397
(87) International publication number: WO 2022/174695

(57) **Abstract**

Provided is a method and device for receiving OAM information blocks. The method includes: determining a reference position and a delivery cycle value of reception of the OAM information block; determining an expected reception position of a next OAM information block according to the reference position and the delivery cycle value, determining an effective reception range according to the expected reception position, and extracting an OAM information block in a client service code block stream within the effective reception range; and synchronizing a sequence relationship of the OAM information blocks according to the type and a sorting result of the extracted OAM information blocks, and extracting content of the OAM information blocks after synchronization so as to monitor the service quality of a carrying pipeline. According to the present disclosure, the valid OAM information block is received and detected from the client service code stream, so as to extract the valid content of the OAM information block, thereby realizing performance detection on the carrying pipeline.

## Description

### Technical Field

Embodiments of the present disclosure relate to the field of communication, and more particularly relate to a method and device for receiving OAM information block.

### Background

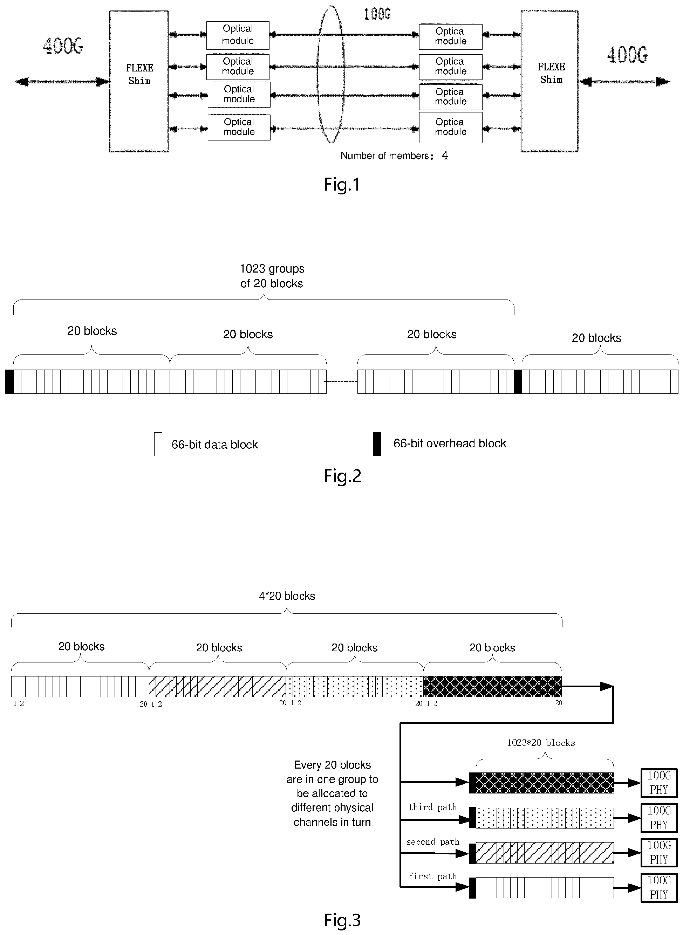

The rapid increase in user network information flow promotes the rapid development of communication network information transmission bandwidth. The interface bandwidth speed of communication devices is increased from 10M to 100M, then to 1G and 10G, and currently up to 100G, and a large number of 100G optical modules have been launched into the market for commercial use. At present, 400G optical modules have been researched and developed, but the price of the 400G optical module is high and exceeds the price of four 100G optical modules, resulting in a lack of economic value for the commercialization of the 400G optical module. In order to deliver 400G services over the 100G optical modules, the International Organization for Standardization defines a FlexE protocol. The FlexE protocol combines the plurality of 100G optical modules to form a high-speed transmission channel. As shown in Fig. 1, the four 100G optical modules are combined based on the FlexE protocol to form a 400G transmission channel, which is equivalent to a transmission speed of one 400G optical module, such that the transmission demands of the 400G services are satisfied without increasing cost. The MTN standard specification defines the addition of operation administration maintenance (Operation Administration Maintenance, OAM) information code blocks in a client service transmission code stream for channel carrying quality monitoring, which are used to detect the service quality state of a client service carrying pipeline, such as a bit error rate, delay time, service discard, and other functions. But the MTN standard specification does not provide guidance about how to receive and detect valid OMA information blocks from the client service code stream, so to extract valid content of the OAM information blocks and realize carrying pipeline performance detection.

### Summary

Embodiments of the present disclosure provide a method and device for receiving OAM information blocks, so as to at least solve the problems about how to receive and detect valid OAM information blocks from a client service code stream in related technologies.

According to an embodiment of the present disclosure, a method for receiving OAM information blocks is provided, and includes: determining a reference position and a delivery cycle value of reception of the OAM information block; determining an expected reception position of the next OAM information block according to the reference position and the delivery cycle value, determining an effective reception range according to the expected reception position, and extracting an OAM information block in a client service code block stream within the effective reception range; and synchronizing a sequence relationship of the OAM information blocks according to the type and a sorting result of the extracted OAM information blocks, and extracting content of the OAM information blocks after synchronization so as to monitor the service quality of a carrying pipeline.

In an exemplary embodiment, the determining a reference position of reception of the OAM information block includes one of following manners: the current actually-received OAM information block serves as the reference position; and an expected sending position of the OAM information block is calculated according to a deviation value between the current actually-received OAM information block and a code block position and serves as the reference position.

In an exemplary embodiment, the determining a delivery cycle value of reception of the OAM information block includes one of the following: the delivery cycle value of the OAM information block is determined according to a device configuration value; the delivery cycle value of the OAM information block is determined according to a cycle value carried by the received OAM information block; and an average interval of the OAM information blocks is calculated according to reception positions of the plurality of OAM information blocks, and a delivery cycle of the OAM information block is determined according to the average interval.

In an exemplary embodiment, the determining an effective reception range according to the expected reception position includes: determining, with the expected reception position as a center, a preset range in front of and behind the expected reception position, or a preset range behind the expected reception position as the effective reception range for receiving the OAM information block.

In an exemplary embodiment, factors affecting the size of the effective reception range of the receiving end include at least one of the following: a maximum deviation value between an expected sending position and an actual sending position of a sending end; and deviation caused by idle block addition and deletion during network carrying for client services.

In an exemplary embodiment, the extracting an OAM information block in a client service code block stream within the effective reception range includes at least one of the following: the OAM information block received within the effective reception range is an OAM information block with a legal position, and is extracted from the client service code block stream; when no OAM information block is received within the effective reception range, an OAM information block vacancy is marked; and OAM information blocks received outside the effective reception range are OAM information blocks with illegal positions, and an illegal position alarm indication is given.

In an exemplary embodiment, there is at most one OAM information block with the legal position within the effective reception range, and when a plurality of OAM information blocks are received within the effective reception range, it is judged that the OAM information block receiving number is in error, and number alarm information is given; and when an OAM information block number alarm is given, one of the OAM information blocks is extracted, or all the OAM information blocks are discarded, and it is judged that there is an OAM information block vacancy.

In an exemplary embodiment, the synchronizing a sequence relationship of the OAM information blocks according to the type and a sorting result of the extracted OAM information blocks, and extracting content of the OAM information blocks after synchronization so as to monitor the service quality of a carrying pipeline includes: extracting an OAM information block within each effective reception range and performing OAM information block carrying sequence synchronization and sequence relationship detection; performing a synchronous judgment process on a receiving-end OAM sequence when a sequence state of the OAM information blocks at the receiving end is a step-out state; and monitoring the service quality of the carrying pipeline according to the content of the OAM information code blocks when the sequence state of the OAM information blocks at the receiving end is a synchronization state.

In an exemplary embodiment, the sequence state synchronization process of the OAM information blocks at the receiving end is implemented by a state machine, and the state machine is a state machine constituted by two states, three states or four states.

In an exemplary embodiment, the performing a synchronous judgment process on a receiving-end OAM sequence when a sequence state of the OAM information blocks at the receiving end is a step-out state includes at least one of the following: when the sequence state of the OAM information blocks at the receiving end is the step-out state, selecting one of the received OAM information blocks as a reference OAM information block, and if the next received OAM information block and the previous reference OAM information block do not conform to an expected sequence relationship, reselecting a reference OAM information block; and when the sequence state of the OAM information blocks at the receiving end is the step-out state, selecting one of the received OAM information blocks as the reference OAM information block, and if the reference OAM information block and following several received OAM information blocks conform to the expected sequence relationship, entering the synchronization state.

In an exemplary embodiment, the monitoring the service quality of the carrying pipeline according to the content of the OAM information code blocks when the sequence state of the OAM information blocks at the receiving end is a synchronization state includes: monitoring the service quality of the carrying pipeline according to the content of the OAM information code blocks when the sequence state of the OAM information blocks at the receiving end is the synchronization state, and the received OAM information blocks conform to the expected sequence relationship.

In an exemplary embodiment, the method further includes: judging that the OAM information block sequence is in error when the OAM information code sequence state at the receiving end is the synchronization state, and the received OAM information blocks do not conform to the expected sequence relationship.

In an exemplary embodiment, the method further includes: making the OAM information block sequence state at the receiving end transition to the step-out state from the synchronization state when the OAM information block sequence state at the receiving end is the synchronization state, and the following several received OAM information blocks do not conform to the expected sequence relationship.

According to another embodiment of the present disclosure, a device for receiving OAM information blocks is provided, is located at a receiving end, and includes: a determining module configured to determine a reference position and a delivery cycle value of reception of the OAM information block; an extraction module configured to determine an expected reception position of a next OAM information block according to the reference position and the delivery cycle value, determine an effective reception range according to the expected reception position, and extract an OAM information block in a client service code block stream within the effective reception range; and a synchronization module configured to synchronize a sequence relationship of the OAM information blocks according to the type and a sorting result of the extracted OAM information blocks, and extract content of the OAM information blocks after synchronization so as to monitor the service quality of a carrying pipeline.

In an exemplary embodiment, the determining module determines the reference position of reception of the OAM information block according to one of following manners: the current actually-received OAM information block serves as the reference position; and an expected sending position of the OAM information block is calculated according to a deviation value between the current actually-received OAM information block and a code block position and serves as the reference position.

In an exemplary embodiment, the determining module determines the delivery cycle value of the OAM information block according to one of following manners: the delivery cycle value of the OAM information block is determined according to a device configuration value; the delivery cycle value of the OAM information block is determined according to a cycle value carried by the received OAM information block; and an average interval of the OAM information blocks is calculated according to reception positions of the plurality of received OAM information blocks, and the delivery cycle of the OAM information block is determined according to the average interval.

In an exemplary embodiment, the extraction module further includes: an effective reception range determining unit, configured to determine, with the expected reception position as a center, a preset range in front of and behind the expected reception position, or a preset range behind the expected reception position as the effective reception position for receiving the OAM information block.

In an exemplary embodiment, the extraction module further includes: a first extraction unit, configured to extract the OAM information block in the client service code block stream when the OAM information block received within the effective reception range is an OAM information block with a legal position; a mark unit, configured to mark that there is an OAM information block vacancy when no OAM information block is received within the effective reception range; and an alarm unit, configured to give an illegal position alarm indication when OAM information blocks received outside the effective reception range are OAM information blocks with illegal positions.

Another embodiment of the present disclosure further provides a computer-readable storage medium storing computer programs, where the computer programs are configured to perform the steps in any above method embodiment during operation.

Another embodiment of the present disclosure further provides an electronic device, including a memory and a processor. The memory stores computer programs, and the processor is configured to operate the computer programs so as to execute the steps in any above method embodiment.

According to the above embodiments of the present disclosure, the valid OAM information block is received and detected from the client service code stream, so as to extract the valid content of the OAM information block, thereby realizing performance detection on the carrying pipeline.

### Brief Description of the Drawings

Fig. 1 is an application schematic diagram of a FlexE protocol according to related technologies.
Fig. 2 is a schematic diagram of arrangement positions of overhead blocks and data blocks of a FlexE protocol according to related technologies.
Fig. 3 is a schematic diagram of distribution of FlexE protocol services on multiple physical channels according to related technologies.
Fig. 4 is schematic structural diagram an overhead frame of a FlexE protocol according to related technologies.
Fig. 5 is a schematic diagram of a process of carrying a client service using a FlexE protocol according to related technologies.
Fig. 6 is a schematic diagram of inserting OAM information blocks into a client service code block stream according to related technologies.
Fig. 7 is a schematic diagram of a sequence of inserting OAM information blocks into a client service code block stream by a sending port according to related technologies.
Fig. 8 is a schematic diagram of actual insertion positions of OAM information blocks into a client service code block stream by a sending port according to related technologies.
Fig. 9 is a schematic diagram of a range of OAM information block position detection by a receiving end according to related technologies.
Fig. 10 is a schematic structural diagram of a computer terminal according to an embodiment of the present disclosure.
Fig. 11 is a flowchart of a method for receiving OAM information blocks according to an embodiment of the present disclosure.
Fig. 12 is a schematic structural diagram of a device for receiving OAM information blocks according to an embodiment of the present disclosure.
Fig. 13 is a schematic structural diagram of a device for receiving OAM information blocks according to another embodiment of the present disclosure.
Fig. 14 is a flowchart of a method for receiving OAM information blocks according to an embodiment of the present disclosure.
Fig. 15 is a schematic diagram of a range of OAM information block position detection by a receiving end according to an embodiment of the present disclosure.
Fig. 16 is a schematic diagram of a range of extracting OAM information blocks in a client service code block stream by a receiving end according to an embodiment of the present disclosure.
Fig. 17 is a schematic diagram of a sequence after extracting OAM information blocks by a receiving end according to an embodiment of the present disclosure.
Fig. 18 is a schematic diagram of processing, by a receiving end, OAM information blocks in a synchronous determined-frame state according to an embodiment of the present disclosure.
Fig. 19 is a schematic diagram of processing, by a receiving end, OAM information blocks in a synchronous determined-frame state according to another embodiment of the present disclosure.
Fig. 20 is a schematic diagram of a state machine according to an embodiment of the present disclosure.
Fig. 21 is a schematic diagram of a state machine according to another embodiment of the present disclosure.

### Detailed Description of the Embodiments

Embodiments of the present disclosure are described in detail by referring to drawings and combining the embodiments as below.

It needs to be explained that terms such as "first" and "second" in the specification and claims of the present disclosure and the above drawings are used to distinguish similar objects but not necessarily used to describe specific sequences or precedence orders.

At present, the FlexE protocol is defined according to a physical layer rate of 100G. In an optical module, before a 100G data message is sent, a data packet message is subject to 64/66 coding, which expands a 64-bit data block into a 66-bit information block, with additional 2 bits ahead a 66-bit block as a start flag of the 66-bit block, and then, the data message is sent out from an optical port in the manner of the 66-bit block. During receiving, the optical port identifies the 66-bit block from received data flow, then, restores original 64-bit data from the 66-bit block, and reassembles the data message. The FlexE protocol is located in a conversion layer from 64 bits to 66 bits, which ranks 66-bit data blocks before the 66-bit data blocks are sent. As shown in Fig. 2, for a 100G service, every 20 66-bit data blocks are in one data block group, there are totally 20 data blocks in each group, representing 20 slots, and each slot represents a service speed of 5G bandwidth. When the 66-bit data blocks are sent,every time when 1023 data block groups (1023*20 data blocks) are sent, a FlexE overhead block is inserted and is denoted by a black block in Fig. 2. After the overhead block is inserted, the data blocks are continuously sent. After the second 1023*20 data blocks are sent, the overhead block is inserted, and in a similar way,the overhead blocks are periodically inserted in the data block sending process, and there are 1023*20 data blocks between the two overhead blocks.

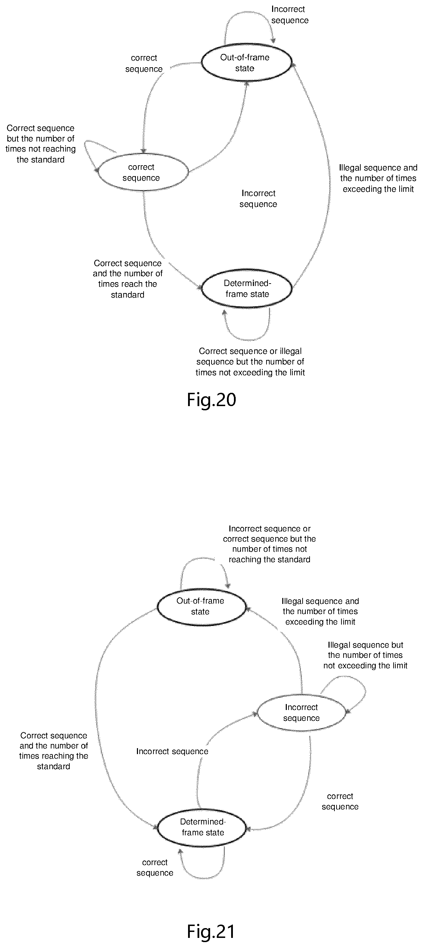

When four paths of 100G physical layers are combined into a 400G logical service bandwidth, as shown in Fig. 3, 20 data blocks constitute a data block group in each physical layer, and one overhead byte is inserted after every 1023 data block groups. In a FlexE shim layer, four paths of 20 data blocks are spliced into a data block group constituted by 80 data blocks, and there are 80 slots in the block group. The client service is delivered in the 80 slots, and each slot has a bandwidth of 5G, resulting in a total service transmission bandwidth of 400G.

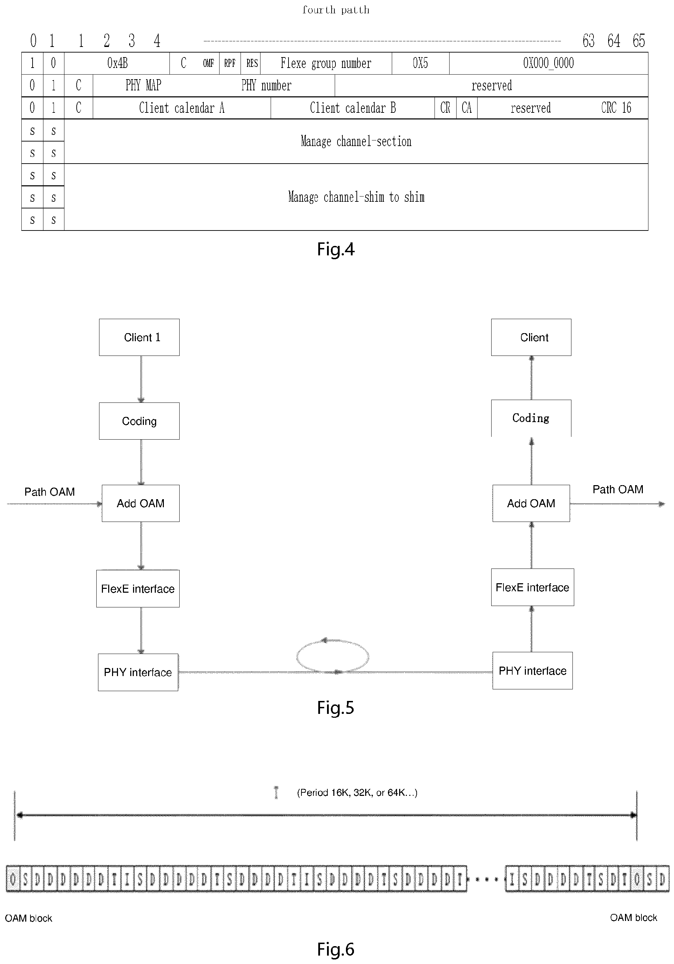

The FlexE overhead block is a 66-bit overhead block, and when the service data flow is sent, one overhead block is inserted after every 1023*20 data blocks. The overhead block has a positioning function in the entire service flow, and the location of the first data block group and the locations of subsequent data block groups in the service can be known after the overhead block is found. The content of the overhead block is shown in Fig. 4, and consecutive 8 overhead blocks constitute an overhead frame. One overhead block is constituted by a 2-bit block flag and a 64-bit block content. The block flag occupies the first two columns, the block content occupies the following 64 columns, the block flag of the first overhead block is "10", and the block flag of each of the following 7 overhead blocks is "01" or "SS"(SS denotes uncertain content). The content of the first overhead block includes: 0x4B (8 bits, hexadecimal 4B),C-bit (1 bit, indicating adjustment and control),OMF-bit (1 bit, indicating an overhead frame replication indication),an RPF-bit (1 bit, indicating a far-end defect indication), a RES-bit (1 bit, a reserved bit), a FlexE group number (20 bits, indicating the number of a member group), 0x5 (4 bits, hexadecimal 5), and 000000 (28 bits, all 0), where 0x4B and 0x5 are flag indicators of the first overhead block, and during receiving, when the corresponding positions of the found overhead block are 0x4B and 0x5, it indicates that the overhead block is the first overhead block in the overhead frame and constitutes the overhead frame together with the following consecutive 7 overhead blocks. In the overhead frame, the reserved section is reserved content, which is still undefined. Please see the black block in Fig. 4. The FlexE protocol defines 8 overhead blocks constituting one frame, where the first overhead block is identified by two fields: 4B (hexadecimal, identified by 0x4B) and 05 (hexadecimal, identified by 0x5). When the contents of 4B and 05 are detected at the corresponding positions of the overhead block, it indicates that the overhead block is the first overhead block and constitutes one frame together with the following consecutive 7 overhead blocks.

Fig. 5 illustrates a process of carrying a client service by the FlexE protocol: the client service is first subject to 64/66 coding, a client data flow is split into 64-bit (8 bytes) block information, and then, the 64-bit information is coded into 66-bit information blocks. After the 64/66 coding, the service flow becomes 66-bit information block flow. These information blocks are divided into two types: data blocks (the first two bits are "01", indicating the blocks being the data blocks) and control blocks (the first two bits are "10", indicating the blocks being the control blocks), and the two types of information blocks are distinguished according to the first two bits in the information blocks. The control information blocks may also be divided into different types of control information blocks (e.g., idle information blocks, also called IDLE blocks), which are distinguished according to the first byte in the control information blocks. After client information is subject to 64/66 coding, rate adjustment is realized by increasing or deleting the idle information blocks, and then the 66-bit information blocks are placed, according to a slot configuration situation, into corresponding positions in a FlexE protocol defined slot calendar).

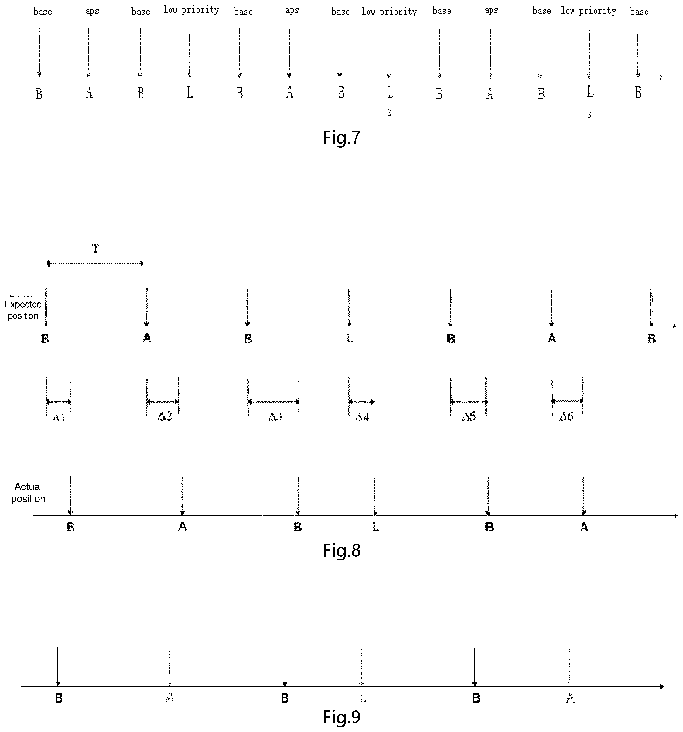

The FlexE protocol provides a flexible transmission channel for the client service, and may allow the size of the transmission channel to be flexibly adjusted according to client bandwidth requirements. The FlexE protocol only provides a pipeline for clients, but does not provide a management capability OAM (Operation, Administration and Maintenance, OAM) for the service quality of the pipeline, and thus, cannot monitor the pipeline service quality in real time. An OMA information block insertion function is added in the MTN standard specification, and the OAM information blocks are inserted in the client service code stream, thereby realizing the monitoring function on the service quality of the client service flow. A specific implementation is shown in Fig. 6, a sending end inserts a special OAM information code block in client service flow code blocks, which carries maintenance and administration information. At a receiving end, the OAM information block in the client code stream is extracted, and the maintenance and administration information can be acquired according to content carried by the OAM information block. At the sending end, the OAM information blocks are generally periodically added in the client service code stream, and as shown in Fig. 7, an OAM information code is inserted after every 16K (i.e., an insertion cycle T=16384) client code blocks in the OAM information block. There are many specific types of OAM information blocks, and the OAM information code blocks defined in the MTN standard include: base code blocks, APS code blocks and low-priority code blocks, where the low-priority OAM information code blocks include CV code blocks, CS code blocks, 1 DM code blocks, 2DMM blocks, 2DMR blocks, etc., and a sending sequence rule for these code blocks is: the base block, the APS block, the base block and the low-priority code block, which are constantly and repeatedly sent according to the sequence rule. As shown in Fig. 8, for the low-priority code blocks, every 64 low-priority code blocks being as a sub-cycle to be sent in turn. A sequence relationship of the low-priority code blocks is as follows: 1st-7th low-priority code blocks are the CV code blocks, an 18th low-priority code block is the CS code block, 19th-31 st low-priority code blocks are 1 DM code blocks/2DMM/2DMR blocks, and positions of 32nd-64th low-priority code blocks are reserved (idle) positions. During sending, the base code block is periodically sent and continuously sent according to a periodic law. The APS code block is sent as required, and only when there is the APS code block, the APS code block is sent, or otherwise, no APS code block is sent, and this round is idle without sending. The low-priority code blocks adopt a similar manner, the CV code block periodically sent is sent every time, low-priority messages corresponding to other code blocks sent as required are sent only when there are sending demands, or otherwise, this round is idle. For the reserved positions in the low-priority message sending rule, this round is idle, and no OAM information code is sent.

After the client service is subject to 64/66-bit coding, a client message sequentially has an S block (a start block), a D block (a data block) and a T block (a tail block). Because the OAM information code can only be inserted between messages, the OAM information code can only be inserted in a position after the T block and before the S block in the message, such that when an expected position is located in a middle position of the message, if the previous information block is the S block or the D block, insertion can be performed only after the current message is ended and the T block occurs, and the actual insertion position lags behind the expected (anticipated) position. As shown in Fig. 8, there is a deviation value Δ between the actual insertion position every time and the expected insertion position, which is a random value and is related to a length of a message being sent during OAM information code block insertion.

Due to the uncertain position of the OAM information block sent by the sending end, idleness of the OAM information block sometimes and absence of the OAM information block, various scenarios may occur during searching for the OAM information block at the receiving end, such as the scenario shown in Fig. 9. A gray indicates that the OAM information block is idle and is not actually received, and a black indicates the actually-received OAM information block. Thus, the receiving end is required to determine whether the occurrence position of the OAM information block is correct or not according to the received OAM information code. When the occurrence position of the OAM information block is correct, whether the OAM information code is of an expected OAM information block type or not and whether a sequence relationship of the OAM information blocks is correct or not are determined.

Thus, an embodiment of the present disclosure provides a method for receiving and detecting an OAM information block in a client service code stream, used to rapidly detect the valid OAM information block, extract valid content of OAM information codes, and perform performance detection on a carrying pipeline.

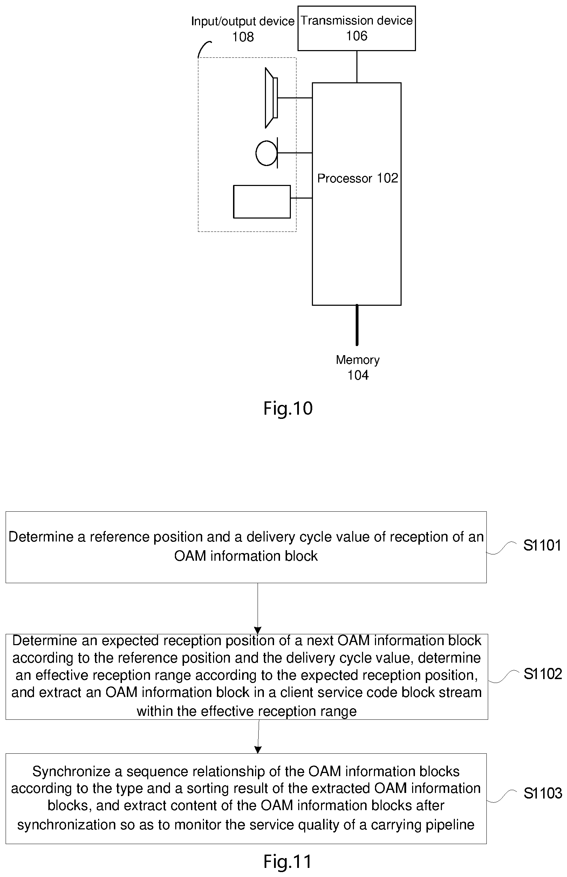

The method embodiments provided by this embodiment of the present application may be performed in a mobile terminal, a computer terminal or similar arithmetic units. Taking operation on the mobile terminal as an example, Fig. 10 is a hardware structure block diagram of a computer terminal operated in a method according to an embodiment of the present disclosure. As shown in Fig. 2, the computer terminal may include one or more (only one is shown in Fig. 10) processors 102 (the processor 102 may include but not limited to a micro control unit (MCU) or a field programmable gate array (FPGA) or other processing units) and a memory 104 configured to store data, where the computer terminal may further include a transmission device 106 for a communication function and an input and output device 108. Those of ordinary skill in the art can understand that a structure shown in Fig. 10 is only schematic and does not limit a structure of the above computer terminal. For example, the computer terminal may further include more or fewer assemblies than shown in Fig. 10, or may have configurations different from those shown in Fig. 10.

The memory 104 may be configured to store computer programs such as software programs and modules of application software and computer programs corresponding to the method in this embodiment of the present disclosure, and the processor 102 performs various functional applications and data processing by operating the computer programs stored in the memory 104, thereby implementing the above method. The memory 104 may include a high-speed random access memory and may further include a nonvolatile memory, such as one or more magnetic storage devicees, flash memories or other nonvolatile solid state memories. In some examples, the memory 104 may further include memories which are remotely set relative to the processor 102 and may be connected to the computer terminal through networks. The examples of the above networks include but not limited to an Internet, an intranet, a local area network, a mobile communication network and a combination thereof.

A transmission device 106 is configured to receive or send data through one network. A specific example of the above networks may include a wireless network provided by a communication supplier of the computer terminal. In one example, the transmission device 106 includes a network interface controller (Network Interface Controller, NIC) which can be connected with other network devices through a base station so as to communicate with the internet. In one example, the transmission device 106 may be a radio frequency (Radio Frequency, RF) module configured to communicate with the internet in a wireless manner.

This embodiment provides a method for receiving OAM information blocks, operating on the above computer terminal. Fig. 11 is a flowchart of a method for receiving OAM information blocks according to an embodiment of the present disclosure. As shown in Fig. 11, the process includes following steps:
Step S1101: Determine a reference position and a delivery cycle value of reception of the OAM information block.
Step S1102: Determine an expected reception position of a next OAM information block according to the reference position and the delivery cycle value, determine an effective reception range according to the expected reception position, and extract an OAM information block in a client service code block stream within the effective reception range.
Step S1103: Synchronize a sequence relationship of the OAM information blocks according to the type and a sorting result of the extracted OAM information blocks, and extract content of the OAM information blocks after synchronization so as to monitor the service quality of a carrying pipeline.

In step S1101 of this embodiment, the reception reference position of the OAM information block may be the position of a current actually-received OAM information block, being the reference code block position. The reception reference position of the OAM information block may also be an expected sending position of the OAM information code block calculated according to a deviation value between the current actually-received OAM information block and a code block position, being the reference position.

The delivery cycle value of the OAM information code may be obtained through a device configuration value, and may also be obtained according to a cycle value carried by the received OAM information block. Specific to the delivery cycle value of the OAM information codes, an average interval of the OAM information codes may be counted and calculated according to reception positions of a plurality of received OAM information blocks, thereby calculating a delivery cycle of the OAM information codes.

In step S1102 of this embodiment, the expected reception position of the next OAM information block to be received is determined according to the reference position and the delivery period of the OAM information block. With the expected reception position as a center, the OAM information block is received in front of and behind the expected reception position within a certain range, or is only received behind the expected reception position within a certain range, and the reception range is the effective reception range.

The effective reception range at the receiving end is determined according to a maximum deviation value (i.e., a deviation value caused by a client maximum message) between an expected sending position and an actual sending position of the sending end, and is influenced by slight offset caused in addition and deletion processes of a small number of idle blocks during carrying of the client service on the network.

The OAM information block received within the effective reception range is an OAM information block with a legal position. If no OAM information block is received within the effective reception range, an OAM information block vacancy is marked; and OAM information blocks received outside the effective reception range are OAM information blocks with illegal positions, and an illegal position alarm indication is given. There is normally at most one valid OAM information block in the effective reception range, and when a plurality of valid OAM information blocks are received within the effective reception range, it is judged that the OAM information block receiving number is in error, and number alarm information is given. When there is an alarm in OAM information block number, only one of OAM information blocks may be selected, or all the OAM information blocks within the range are discarded, and it is judged that there is an OAM information block vacancy.

In step S1103 of this embodiment, an OAM information block within each effective reception range is extracted, and OAM information block carrying sequence synchronization and sequence relationship detection are performed. When the sequence state of the OAM information blocks at the receiving end is a step-out state, a process of synchronous judgment on the OAM sequence at the receiving end is performed. When the sequence state of the OAM information blocks at the receiving end is a synchronization state, content of the OAM information code blocks is applied to monitor the service quality of the carrying pipeline. The sequence state synchronization process of the OAM information blocks at the receiving end may be implemented by a state machine, and the state machine may be a state machine constituted by two states, or four states, or may be other various state machines.

In step S1103 of this embodiment, when the sequence state of the OAM information blocks at the receiving end is the step-out state, one of received OAM information blocks is selected as a reference OAM information block, and if the next received OAM information block and the previous reference OAM information block do not conform to a BABL sequence relationship, the reference OAM information block is reselected. When the sequence state of the OAM information blocks at the receiving end is the step-out state, one of received OAM information blocks is selected as the reference OAM information block, and if the reference OAM information block and following several received OAM information blocks (e.g., 4) conform to the BABL sequence relationship, enter the synchronization state.

In step S1103 of this embodiment, if the OAM information block sequence state at the receiving end is the synchronization state, and the received OAM information blocks conform to the expected BABL sequence relationship, content carried by the OAM information blocks is applied. If the OAM information block sequence state at the receiving end is the synchronization state, and the received OAM information blocks do not conform to the expected BABL sequence relationship, it is judged that the OAM information block sequence is in error. When the OAM information block sequence state at the receiving end is the synchronization state, if the following several(e.g., 4) received OAM information blocks do not conform to the expected BABL sequence relationship, the OAM information block sequence state at the receiving end is the step-out state.

By describing the above implementations, those skilled in the art can clearly know that the method according to the above embodiments may be implemented by means of software and necessary universal hardware platforms and may also be implemented by hardware, but the former is the better implementation under many situations. Based on the understanding, a technical solution of the present disclosure essentially or parts making contribution to the prior art may be embodied in a software product form. A computer software product is stored in a storage medium (e.g., a ROM/RAM, a disk and a compact disc), which includes a plurality of instructions enabling one terminal device (a mobile phone, or a computer, or a server or a network device, etc.) to execute the method according to various embodiments of the present disclosure.

This embodiment further provides a device for receiving OAM information blocks, configured to implement the above embodiments and preferred implementation, which have been described and are not described in detail. The term "module" or "unit" used as below may realize combination of software and/or hardware with preset functions. The devices described by the following embodiments are preferably realized by the software, but it is possible and conceivable for realizing the devices through the hardware or combination of the software and the hardware.

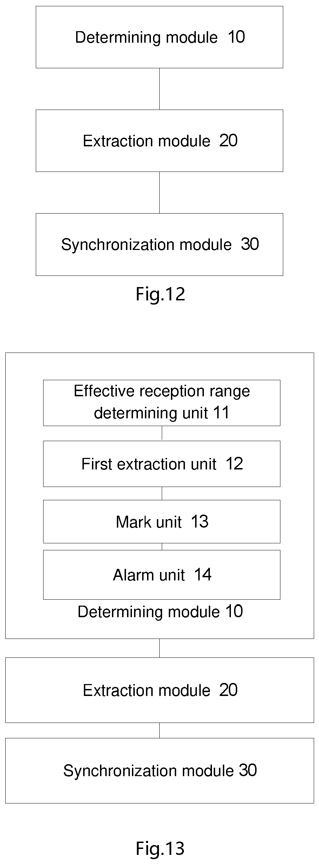

Fig. 12 is a structure block diagram of a device for receiving OAM information blocks according to an embodiment of the present disclosure. As shown in Fig. 12, the device includes a determining module 10, an extraction module 20 and a synchronization module 30.

The determining module 10 is configured to determine a reference position and a delivery cycle value of reception of the OAM information block.

The extraction module 20 is configured to determine an expected reception position of a next OAM information block according to the reference position and the delivery cycle value, determine an effective reception range according to the expected reception position, and extract an OAM information block in a client service code block stream within the effective reception range.

The synchronization module 30 is configured to synchronize a sequence relationship of the OAM information blocks according to the type and a sorting result of the extracted OAM information blocks, and extract content of the OAM information blocks after synchronization so as to monitor the service quality of a carrying pipeline.

In an exemplary embodiment, the determining module 10 may determine the reference position of reception of the OAM information block according to one of following manners: the current actually-received OAM information block serves as the reference position; and an expected sending position of the OAM information block is calculated according to a deviation value between the current actually-received OAM information block and a code block position and serves as the reference position.

In an exemplary embodiment, the determining module 10 may determine the delivery cycle value of the OAM information block according to one of following manners: the delivery cycle value of the OAM information block is determined according to a device configuration value; the delivery cycle value of the OAM information block is determined according to a cycle value carried by the received OAM information block; and an average interval of the OAM information blocks is calculated according to reception positions of the plurality of received OAM information blocks, and the delivery cycle of the OAM information block is determined according to the average interval.

Fig. 13 is a structure block diagram of a device for receiving OAM information blocks according to another embodiment of the present disclosure. As shown in Fig. 13, the device includes all the modules shown in Fig. 12, and moreover, the extraction module 10 further includes an effective reception range determining unit 11, a first extraction unit 12, a mark unit 13 and an alarm unit 14.

The effective reception range determining unit 11 is configured to determine, with the expected reception position as a center, a preset range in front of and behind the expected reception position, or a preset range behind the expected reception position as the effective reception range for receiving the OAM information block.

The first extraction unit 12 is configured to extract the OAM information block from a client service code block stream in a case that the OAM information block received within the effective reception range is the OAM information block with a legal position.

The mark unit 13 is configured to mark that there is a vacancy for the OAM information block in a case that no OAM information block is received within the effective reception range.

The alarm unit 14 is configured to give an illegal position alarm indication in a case that OAM information blocks received outside the effective reception range are OAM information blocks with illegal positions.

It needs to be explained that the above modules may be realized through the software or hardware, and for the latter, the modules may be realized by modes including but not limited to a following mode that the above modules are all located in the same processor; or the above modules are respectively located in different processors in the form of any combination.

To facilitate understanding of the technical solutions provided by the present disclosure, the technical solutions are described in detail by combining specific scenarios below.

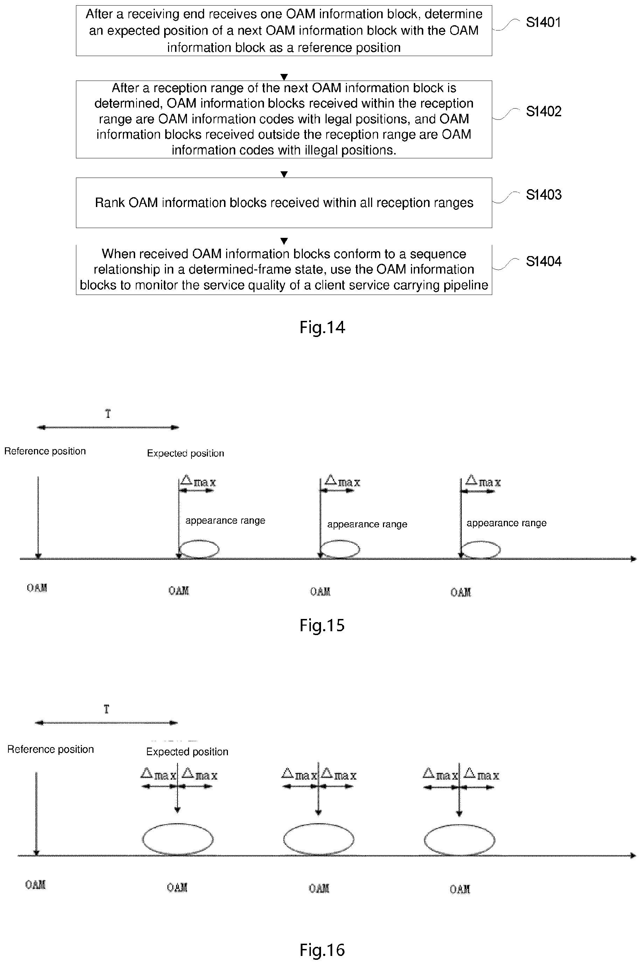

This embodiment provides a method for receiving OAM information blocks. Fig. 14 is a flowchart of a method for receiving OAM information blocks according to an embodiment of the present disclosure. As shown in Fig. 14, the specific implementing method at a receiving end includes following steps:
Step S1401: After the receiving end receives one OAM information block, an expected position of a next OAM information block is determined with the OAM information block as a reference position.

Specifically, the first received OAM information block is an actual reception position, which may be or may not be an expected sending position, and there is a deviation between the actual position and the expected position. If the received OAM information block carries a deviation value between the actual position and the expected position, a real expected sending position can be calculated, and the calculated expected position serves as the reference position. If the expected sending position cannot be obtained, the actually-received OAM position serves as the reference position. After the reference position is determined, the expected position of the next OAM information block can be obtained according to a T cycle. The cycle value T may be obtained through system configuration, or carried by the OAM information block to the receiving end from a sending end. The expected position of the next OAM information block is calculated according to the reference position and the cycle value T, and the next OAM information block is received nearby the expected position. There may be a deviation value Δ between the actual occurrence position of the next OAM information block and the calculated expected position, and is related to a maximum message length. When the maximum message length on a link is 9600 bytes, a 9600-byte message is coded to become 1200 66-bit code blocks, such that a maximum deviation value Δmax caused by the message length is 1200. When the maximum message length is 1518 bytes, a 1518-byte message is coded to become 190 66-bit code blocks, such that a maximum deviation value Δmax caused by the message length is 190. When the client service is carried and delivered on the network, an intermediate network device performs, due to clock jitter, micro addition and deletion on an idle block (IDLE block), an LF (local fault) block and a RF (remote fault) block between messages. When the receiving end detects that the maximum deviation value Δmax between the actual position of the OAM information block and the expected position may be slightly greater than 1200 (the maximum message is 9600 bytes) or 190 (the maximum message is 1518 bytes), the maximum increase in number does not exceed 1 every after the client service passes through two devices, the deviation value is slightly increased and may be ignored, and the variable may also be considered according to the number of devices where the client service passes during carrying and transmission on the network.

At the receiving end, when the reference code block is the real expected position of the sending end, the expected position of the next OAM information block calculated according to the cycle value is also the real expected position of the sending end, and a next code block only appears at the real expected position or behind the real expected position, that is, the next OAM information block may appear within the range:(the real expected position, the expected position+Δmax), which is shown in Fig. 15. When the reference position is the actual position of the OAM information block at the receiving end (the real expected position cannot be known) and is not the real expected position, there is a deviation between the reference position and the real expected position, the expected position of the next OAM information block is calculated according to the actual reception position being the reference position and the cycle value, which is not the real expected position, such that the calculated next OAM information block may appear in front of the calculated expected position or behind the calculated expected position, that is, the next OAM information block may appear within the range: (the calculated expected position-Δmax, the calculated expected position+Δmax), which is shown in Fig. 16.

Step S1402: After a reception range of the next OAM information block is determined, OAM information blocks received within the reception range are OAM information codes with legal positions, and OAM information blocks received outside the reception range are OAM information codes with illegal positions. After the OAM information codes with illegal positions are received, an OAM information code position abnormal alarm is reported. Only one OAM information block appears within the reception range of one OAM information block, and when two or more OAM information blocks are received, an abnormal OAM information block number is reported, such that all the OAM information blocks within the range are discarded, an OAM information block error or an OAM information block vacancy is marked, or one of the plurality of OAM information blocks is selected for subsequent processing. When no OAM information block is received within the reception range, an OAM information block vacancy is marked.

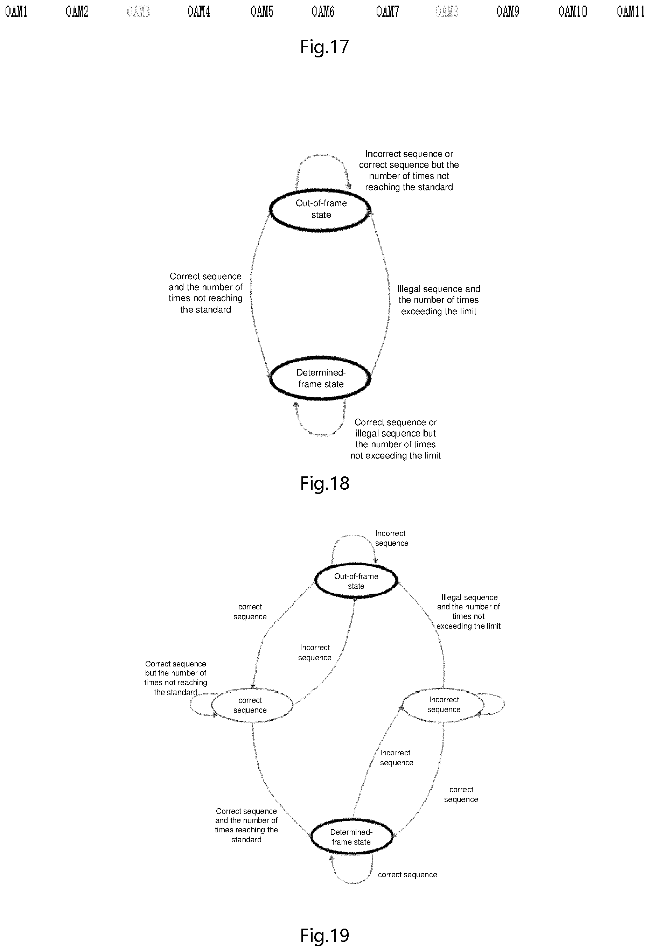

Step S1403: OAM information blocks received within all reception ranges are ranked (a vacancy is marked when no OAM information block is received within the reception range). As shown in Fig. 17, an OAM information block vacancy is marked within a third range and an eighth range, and OAM information blocks within other ranges are all normally-received OAM information blocks. The sending end sends the OAM information blocks according to B-A-B-L, and the receiving end receives the OAM information blocks according to B-A-B-L. The four blocks in the B-A-B-L sequence relationship are regarded as a one-frame structure. When the OAM information blocks at the receiving end are in a sequence relationship undetermined-frame state, after the receiving end receives a certain number of OAM information blocks (e.g., 4 OAM information blocks), satisfying the B-A-B-L sequence relationship, the receiving end transitions to a sequence determined-frame state from the sequence relationship undetermined-frame state and receives following OAM information blocks according to the determined-frame state. If the received OAM information blocks do not conform to the B-A-B-L sequence relationship in the determined-frame state, an OAM sequence relationship error alarm is reported. When the sequence relationships of the received OAM information blocks is in error for many times, the OAM receiving end transitions to a sequence out-of-frame state from the sequence determined-frame state. The process of frame determining on the OAM information block receiving sequence at the receiving end may be represented by a state machine. Fig. 18 is an implementation example of two states (an out-of-frame state and a determined-frame state). In the out-of-frame state, when received OAM information blocks conform to an expected sequence and the sequence is correct for a specified number of times, transition to the determined-frame state from the out-of-frame state, or otherwise, stay in the out-of-frame state. In the out-of-frame state, when the sequence is in error to a certain degree, it indicates that the reference position may be wrong, one OAM information block position is reselected as the reference position, an expected reception range is re-determined, and a reception sequence checking process restarts. In the determined-frame state, when the sequence of received OAM information blocks is illegal and the number of illegal times reach a certain threshold, transition to the out-of-frame state from the determined-frame state, or otherwise, continue to stay in the determined-frame state.

Step S1404: When received OAM information blocks conform to the sequence relationship in the determined-frame state, the OAM information blocks may be used to monitor the service quality of a client service carrying pipeline.

The threshold quantity from the out-of-frame state transitioning to the determined-frame state may be decided through configuration, which may be the threshold quantity after a plurality of consecutive OAM information blocks conform to the sequence relationship, or the threshold quantity within a certain number of windows, for example, eight of ten OAM information blocks conform to the sequence relationship. In a similar way, the illegal quantity from the determined-frame state transitioning to the out-of-frame state may be decided through configuration, which may be the illegal quantity that a plurality of consecutive OAM information blocks do not conform to the sequence relationship, or the illegal quantity within a certain number of windows, for example, eight of ten OAM information blocks do not conform to the sequence and are illegal.

In this embodiment, changes of the out-of-frame state and the determined-frame state may be represented by a two-state machine or a four-state machine. As shown in Fig. 19, two temporary states are added in Fig. 19 and include: a correct sequence state and an incorrect sequence state. After the OAM information blocks in a correct sequence are received in the out-of-frame state, transition to the correct sequence state. When the OAM information blocks in the correct sequence are received in the correct sequence state, the number of the OAM information blocks in the correct sequence is accumulated, if the number of the OAM information blocks in the correct sequence reaches the standard (an expected number), transition to the determined-frame state, or otherwise, temporally stay in the correct sequence state. When OAM information blocks in an incorrect sequence are received in the correct sequence state (or a certain number of incorrect-sequence blocks are received), transition to the out-of-frame state. After OAM information blocks in the incorrect sequence are received in the determined-frame state, transition to an incorrect sequence temporary state. When OAM information blocks in an incorrect sequence are received in the incorrect sequence state, the number of the OAM information blocks in the incorrect sequence is accumulated, if the number of the OAM information blocks in the incorrect sequence is beyond the standard (reaching a certain number), transition to the out-of-frame state, or otherwise, temporally stay in the incorrect sequence state. When OAM information blocks in a correct sequence are received in the incorrect sequence state (or a certain number of correct-sequence OAM information blocks are received), re-transition to the determined-frame state. Changes of the out-of-frame state and the determined-frame state may be represented by a three-state machine besides the two-state machine and the four-state machine. As shown in Fig. 20 and Fig. 21, the three-state machine is a middle transition state machine between the two-state machine and the four-state machine.

The embodiment of the present disclosure further provides a computer-readable storage medium storing computer programs, where the computer programs are set to execute steps in any above method embodiment when operated.

In an exemplary embodiment, the above computer-readable storage medium may include but not limited to: a U disk, a read-only memory (Read-Only Memory, ROM), a random access memory (Random Access Memory, RAM), a mobile hard disk, a disk or a compact disc or other media capable of storing the computer programs.

An embodiment of the present disclosure further provides an electronic device including a memory and a processor, where the memory stores computer programs, and the processor is configured to operate the computer programs so as to execute steps in any above method embodiment.

In an exemplary embodiment, the above electronic device may further include a transmission device and an input and output device, where the transmission device is connected to the above processor, and the input and output device is connected to the above processor.

Specific examples in this embodiment may refer to the examples described in the above embodiments and exemplary implementations, which are not described in detail in this embodiment.

Obviously, those skilled in the art should understand that modules or steps in the present disclosure may be realized through a general-purpose computing device, may be centralized in a single computing device or distributed over a network formed by a plurality of computing devices and may be realized by executable program codes of the computing device, such that the modules or steps may be stored in a storage device to be executed by the computing device; and the shown or described steps may be executed in sequence different from the sequence herein under some situations, or the modules or steps may be made into various integrated circuit modules, or more of the modules or steps may be made into single integrated circuit modules to be realized. Thus, the present disclosure is not limited to any specific hardware and software combination.

The foregoing descriptions are merely preferred embodiments of the present disclosure, but are not intended to limit the present disclosure. Those skilled in the art may make various modifications and variations to the present disclosure. Any modification, equivalent replacement, improvement, etc., made within the principle of the present disclosure shall fall within the scope of protection of the present disclosure.

## Claims

1. A method for receiving OAM information blocks, comprising:
determining a reference position and a delivery cycle value of reception of the OAM information block;
determining an expected reception position of a next OAM information block according to the reference position and the delivery cycle value, determining an effective reception range according to the expected reception position, and extracting an OAM information block in a client service code block stream within the effective reception range; and
synchronizing a sequence relationship of the OAM information blocks according to the type and a sorting result of the extracted OAM information blocks and extracting content of the OAM information blocks after synchronization so as to monitor the service quality of a carrying pipeline.

2. The method according to claim 1, wherein the determining a reference position of reception of the OAM information block comprises one of the following:
the current actually-received OAM information block serves as the reference position; and
an expected sending position of the OAM information block is calculated according to a deviation value between the current actually-received OAM information block and a code block position and serves as the reference position.

3. The method according to claim 1, wherein the determining a delivery cycle value of the OAM information block comprises one of the following:
the delivery cycle value of the OAM information block is determined according to a device configuration value;
the delivery cycle value of the OAM information block is determined according to a cycle value carried by the received OAM information block; and
an average interval of the OAM information blocks is calculated according to reception positions of the plurality of OAM information blocks, and a delivery cycle of the OAM information block is determined according to the average interval.

4. The method according to claim 1, wherein the determining an effective reception range according to the expected reception position comprises:
determining, with the expected reception position as a center, a preset range in front of and behind the expected reception position, or a preset range behind the expected reception position as the effective reception range for receiving the OAM information block.

5. The method according to claim 4, wherein factors affecting the size of the effective reception range of a receiving end comprise at least one of the following:
a maximum deviation value between an expected sending position and an actual sending position of a sending end; and
deviation of client services caused by idle block addition and deletion during network carrying.

6. The method according to claim 1, wherein the extracting an OAM information block in a client service code block stream within the effective reception range comprises at least one of the following:
the OAM information block received within the effective reception range is an OAM information block with a legal position, and is extracted from the client service code block stream;
an OAM information block vacancy is marked in a case that no OAM information block is received within the effective reception range; and
an illegal position alarm indication is given in a case that OAM information blocks received outside the effective reception range are OAM information blocks with illegal positions.

7. The method according to claim 6, wherein there is at most one OAM information block with the legal position within the effective reception range, and in a case that a plurality of OAM information blocks are received within the effective reception range, it is judged that the OAM information block receiving number is in error, and number alarm information is given; and
in a case that an OAM information block number alarm is given, one of the OAM information blocks is extracted, or all the OAM information blocks are discarded, and it is judged that there is an OAM information block vacancy.

8. The method according to claim 1, wherein the synchronizing a sequence relationship of the OAM information blocks according to the type and a sorting result of the extracted OAM information blocks, and extracting content of the OAM information blocks after synchronization so as to monitor the service quality of a carrying pipeline comprises:
extracting an OAM information block within each effective reception range and performing OAM information block carrying sequence synchronization and sequence relationship detection;
performing a synchronous judgment process on a receiving-end OAM sequence in a case that a sequence state of the OAM information blocks at a receiving end is a step-out state; and
monitoring the service quality of the carrying pipeline according to the content of the OAM information code blocks in a case the sequence state of the OAM information blocks at the receiving end is a synchronization state.

9. The method according to claim 8, wherein the sequence state synchronization process of the OAM information blocks at the receiving end is implemented by a state machine, and the state machine is a state machine constituted by two states, three states or four states.

10. The method according to claim 8, wherein the performing a synchronous judgment process on a receiving-end OAM sequence in a case that a sequence state of the OAM information blocks at the receiving end is a step-out state comprises at least one of the following:
in a case that the sequence state of the OAM information blocks at the receiving end is the step-out state, selecting one of the received OAM information blocks as a reference OAM information block, and in a case that the next received OAM information block and the previous reference OAM information block do not conform to an expected sequence relationship, reselecting a reference OAM information block; and
in a case that the sequence state of the OAM information blocks at the receiving end is the step-out state, selecting one of the received OAM information blocks as the reference OAM information block, and in a case that the reference OAM information block and following several received OAM information blocks conform to the expected sequence relationship, entering the synchronization state.

11. The method according to claim 8, wherein the monitoring the service quality of the carrying pipeline according to the content of the OAM information code blocks in a case the sequence state of the OAM information blocks at the receiving end is a synchronization state comprises:
monitoring the service quality of the carrying pipeline according to the content of the OAM information code blocks in a case that the sequence state of the OAM information blocks at the receiving end is the synchronization state, and the received OAM information blocks conform to the expected sequence relationship.

12. The method according to claim 8, further comprising:
judging that the OAM information block sequence is in error in a case that the OAM information code sequence state at the receiving end is the synchronization state, and the received OAM information blocks do not conform to the expected sequence relationship.

13. The method according to claim 8, further comprising:
making the OAM information block sequence state at the receiving end transition to the step-out state from the synchronization state in a case that the OAM information block sequence state at the receiving end is the synchronization state, and the following several received OAM information blocks do not conform to the expected sequence relationship.

14. A device for receiving OAM information blocks, located at a receiving end, comprising:
a determining module, configured to determine a reference position and a delivery cycle value of reception of the OAM information block;
an extraction module, configured to determine an expected reception position of a next OAM information block according to the reference position and the delivery cycle value, determine an effective reception range according to the expected reception position, and extract an OAM information block in a client service code block stream within the effective reception range; and
a synchronization module, configured to synchronize a sequence relationship of the OAM information blocks according to the type and a sorting result of the extracted OAM information blocks and extract content of the OAM information blocks after synchronization so as to monitor the service quality of a carrying pipeline.

15. The device according to claim 14, wherein the determining module determines the reference position of reception of the OAM information block according to one of following manners:
the current actually-received OAM information block serves as the reference position; and
an expected sending position of the OAM information block is calculated according to a deviation value between the current actually-received OAM information block and a code block position and serves as the reference position.

16. The device according to claim 14, wherein the determining module determines the delivery cycle value of the OAM information block according to one of following manners:
the delivery cycle value of the OAM information block is determined according to a device configuration value;
the delivery cycle value of the OAM information block is determined according to a cycle value carried by the received OAM information block; and
an average interval of the OAM information blocks is calculated according to reception positions of the plurality of OAM information blocks, and a delivery cycle of the OAM information block is determined according to the average interval.

17. The device according to claim 14, wherein the extraction module further comprises:
an effective reception range determining unit, configured to determine, with the expected reception position as a center, a preset range in front of and behind the expected reception position, or a preset range behind the expected reception position as the effective reception range for receiving the OAM information block.

18. The device according to claim 14, wherein the extraction module further comprises:
a first extraction unit, configured to extract the OAM information block from a client service code block stream in a case that the OAM information block received within the effective reception range is the OAM information block with a legal position;
a mark unit, configured to mark that there is a vacancy for the OAM information block in a case that no OAM information block is received within the effective reception range; and
an alarm unit, configured to give an illegal position alarm indication in a case that OAM information blocks received outside the effective reception range are OAM information blocks with illegal positions.

19. A computer-readable storage medium, storing a computer program, wherein the computer program is configured to, when executed by a processor, implement the steps of the method according to any one of claims 1 to 13.

20. An electronic device, comprising a memory, a processor, and a computer program stored in the memory and capable of running on the processor, wherein the processor is configured to execute the computer program to implement the steps of the method according to any one of claims 1 to 13.
